# EUROPEAN PATENT SPECIFICATION

(11) **EP 2 778 485 B1**
(45) Date of publication and mention of the grant of the patent: **02.03.2016**
(21) Application number: 14159627.0
(22) Date of filing: 13.03.2014
(51) Int. Cl.: F16K 11/22, F16K 31/00, G05D 23/13, F16K 51/00, F16K 17/00

(54) **Valve**
Ventil
Vanne

(30) Priority: 13.03.2013 GB 201304537
(43) Date of publication of application: 17.09.2014
(73) Proprietor: Kohler Mira Limited, Gloucestershire GL52 5EP (GB)
(72) Inventor: Conway, Sean, Cheltenham, Gloucestershire GL52 5EP (GB); Peel, Kevin, Cheltenham, Gloucestershire GL52 5EP (GB)
(74) Representative: Wightman, David Alexander

(56) References cited:
- EP-A1- 0 623 989
- EP-A1- 0 691 495
- EP-A2- 1 435 451
- WO-A1-02/23032
- GB-A- 2 143 304
- GB-A- 2 342 504

## Description

### BACKGROUND

The present application relates to valves for controlling flow of a fluid.

More especially, the application relates to a fail safe mechanism for power operated valves. The concepts disclosed herein have particular, but not exclusive, application to valves for controlling flow of one or more fluids. The concepts disclosed herein may have application to plumbing fittings and fixtures and water supply systems and installations for washing, showering, bathing and the like that employ such plumbing fittings and fixtures.

Power operated valves are known in which a valve member is moveable relative to a valve seat between open and closed positions by means of a linear actuator for controlling fluid flow. Such valves can be left in an open position in the event of a power supply failure allowing fluid flow to continue in an uncontrolled manner until the power supply is restored.

The present application is intended to address this problem.

EP-A-0623989 discloses a valve in which a valve member is biased towards the closed position by a spring. The valve member is connected to an actuator for movement of the valve member to open against the biasing of the valve member.

### SUMMARY

The invention relates to a valve as defined in claim 1. Optional features of the valve are defined in claims 2 to 10. It also relates to a method of operating a valve for controlling fluid flow as defined in claim 11.

The invention relates to a valve for controlling fluid flow and a fail-safe device responsive to failure of a power supply to the valve. The valve has a valve member coupled to an actuator for movement towards and away from a closed position for controlling fluid flow through the valve. The actuator is held in a control position by the fail-safe device for normal operation of the valve with the power supply on. The actuator is released in response to failure of the power supply for movement of the actuator and valve member towards the closed position.

According to the invention the actuator is held in the control position by a mechanical coupling. The fail-safe device includes a latch unit configured to engage the actuator to hold the actuator in the control position. The latch unit includes a catch. The actuator is held in the control position by the catch when the power supply is on and is released when the power supply is interrupted. The biasing force is stored in the control position of the actuator and is released when the actuator is released.

The actuator may be biased away from the control position. The biasing may be provided by a spring. The spring may be in an energised state when the actuator is held in the control position. Energy stored in the spring in the energised state may be employed when the actuator is released to move the actuator and valve member towards the closed position. The actuator and valve member may be arranged to move together towards the closed position. The actuator and valve member may be guided for axial movement. The valve member may be moved to a safe position in response to fail-safe operation. The valve member may be moved to the closed position to shut-off fluid flow. Alternatively, the valve member may be moved to a position in which some fluid flow is permitted.

The actuator may be held in the control position by a magnetic coupling. The fail-safe device may include a latch unit configured to create a magnetic attraction force to hold the actuator in the control position. The latch unit may include an electromagnet. The actuator may be held in the control position by the electromagnet when the power supply is on and is released when the power supply is interrupted. The magnetic attraction force exceeds the biasing force to retain the actuator in the control position until the actuator is released. The magnetic attraction force may be slightly higher than the biasing force in the control position.

The valve member may remain in the safe position when power to the valve is restored following fail-safe operation until the actuator is re-set in the control position. The actuator may be a linear actuator, for example a stepper motor. The actuator may be coupled to the valve member by a coupling unit for converting rotational movement of the actuator into linear movement of the valve member towards and away from the closed position. The actuator may be operable to move relative to the valve member for re-setting the actuator in the control position.

Another exemplary embodiment relates to a method of operating a valve for controlling fluid flow as defined in claim 11.

Other features, benefits and advantages of the valve described herein will be apparent from the description hereinafter of exemplary embodiments thereof and of the application of the valve to plumbing fixtures and fittings and water supply systems and installations employing such plumbing fixtures and fittings. Such description is provided for the purpose of demonstrating the diverse ways in which the valve can be configured and used and is not intended to be limiting on the scope of the disclosure.

There now follows by way of example only a detailed description of various exemplary embodiments disclosed in the present application, with reference to the accompanying drawings.

### BRIEF DESCRIPTION OF THE DRAWINGS

Figure 1 is a sectional view of valve and fail-safe device according to a first embodiment not belonging to the invention with the valve in a closed position;
**Figure 2** is a sectional view of a valve and fail-safe device shown in Figure 1 with the valve in an open position during normal operation with the power on;
**Figure 3** is a sectional view of the valve and fail-safe device shown in Figures 1 and 2 with the valve in a closed position during fail-safe operation with the power off;
**Figure 4** is a sectional view of a valve and fail-safe device according to a second embodiment with the valve in an open position during normal operation with the power on;
**Figure 5** is a sectional view of the valve and fail-safe device shown in Figure 4 with the valve in a closed position during fail-safe operation with the power off;
**Figure 6** shows the fail-safe device of Figures 4 and 5 in a closed state for normal operation of the valve with the power on;
**Figure 7** shows the fail-safe device of Figure 6 in an open state for fail-safe operation of the valve with the power off:
**Figure 8** shows a modification to the fail safe device shown in Figures 6 and 7 in a closed_state for normal operation of the valve with the power on;
**Figure 9** shows the fail-safe device of Figure 8 in an open state for fail-safe operation of the valve with the power off;
**Figure 10** is a sectional view of a valve and fail-device according to a third embodiment not belonging to the invention with the valve in a closed position during fail-safe operation with the power off;
**Figure 11** is a sectional view of a valve and fail-safe device according to a fourth embodiment not belonging to the invention with the valve in a closed position;
**Figure 12** is a sectional view of a valve and fail-safe device shown in Figure 11 with the valve in an open position during normal operation with the power on; and
**Figure 13** is a sectional view of the valve and fail-safe device shown in Figures 11 and 12 with the valve in a closed position during fail-safe operation with the power off.

### DETAILED DESCRIPTION OF THE EXEMPLARY EMBODIMENTS

Before turning to the Figures, which illustrate the exemplary embodiments in detail, it should be understood that the present disclosure is not limited to the details or methodology set forth in the description or illustrated in the Figures. It should also be understood that the terminology is for the purpose of description only and should not be regarded as limiting.

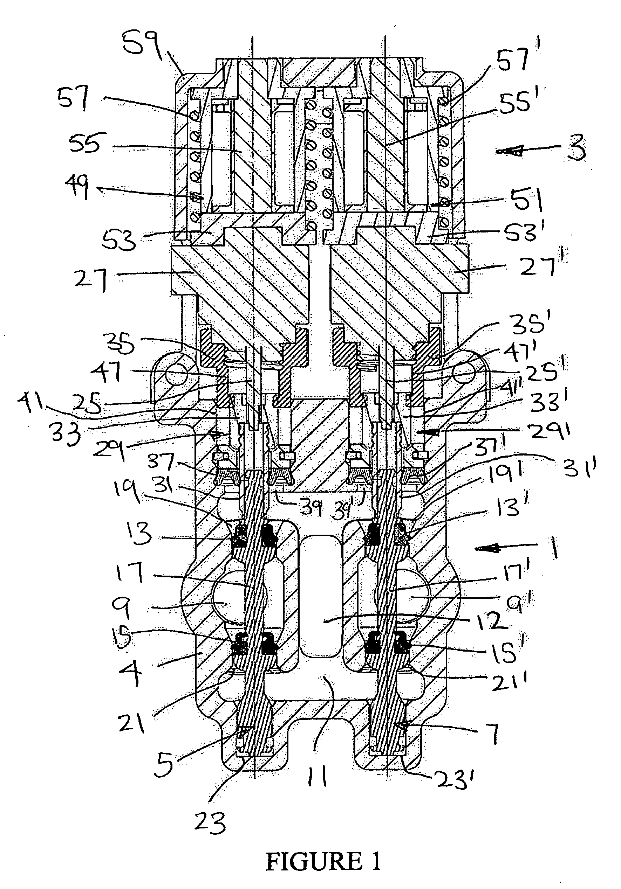

Referring first to Figures 1 to 3 of the accompanying drawings a valve 1 and fail-safe device 3 according to a first embodiment of the invention is shown. The valve 1 is described in our co-pending United Kingdom Patent Application No.2503279-A, the entire disclosure of which is incorporated herein by reference. In the description that follows the valve 1 is described only insofar as necessary for an understanding of the operation of the fail-safe device 3 and the reader is directed to the disclosure of United Kingdom Patent Application No.2503279-A for a more detailed description of the valve 1 and applications thereof.

The valve 1 includes a body 4 of metal, for example brass, although other materials may be used. The body 4 houses a first flow control valve 5 for a first fluid and a second flow control valve 7 for a second fluid. The first and second fluids may be water having different temperatures (nominally hot and cold water). The valve 1 may provide water having a desired temperature for use. The valve 1 may provide cold water only, hot water only or a mixture of hot and cold water. The valve 1 may be incorporated in a water supply system or installation having one or more outlets for washing, showering, bathing or the like. Each outlet may include a faucet incorporating the valve 1. Alternatively, the valve 1 may be incorporated in a fitting supplying more than one outlet. For example multiple shower heads may be supplied with water from one valve 1. Other applications and uses of the valve 1 will be apparent to those skilled in the art from the description of the invention provided herein and the invention extends to and includes all modifications and changes within the spirit and scope of the disclosure.

The flow control valves 5 and 7 are similar and there follows a description of the construction and operation of the first flow control valve 5. The same reference numerals have been used but with an additional apostrophe to identify similar features of the second flow control valve 7 such that the construction and operation of the second flow control valve 7 will be apparent and understood from the description of the first flow control valve 5.

The first flow control valve 5 includes an inlet chamber 9 connected to an inlet (not shown) for a first fluid and controls flow of the first fluid from the inlet chamber 9 to a mixing chamber 11. The mixing chamber 11 provides a volume in which the first and second fluids can mix and directs the mixed fluid to an outlet 12.

The first flow control valve 5 includes first and second valve members 13, 15. The first and second valve members 13, 15 may be located a pre-determined distance apart. For example the first and second valve members 13, 15 may be fixedly mounted on a spool 17 such that they are held a predetermined distance apart. The first valve member 13 is preferably adapted to co-operate with a first valve outlet 19 and the second valve member 15 is preferably adapted to co-operate with a second valve outlet 21. The first valve outlet 19 may be at one end of the inlet chamber 9 and the second valve outlet 21 may be at the other end of the inlet chamber 9. The first and second valve outlets 19, 21 are axially aligned. The first and second valve outlets 19, 21 preferably open to the mixing chamber 11. The valve members 13, 15 may be made of rubber.

A first end of the spool 17 is preferably slidably received within a blind guide bore 23 formed in the valve body 4. A second, opposed end of the spool 17 is preferably connected to a shaft 25 of an actuator 27. The second end of the spool 17 may be connected to the shaft 25 by a coupling unit 29. The coupling unit 29 may convert rotational movement of the shaft 25 into linear movement of the spool 17. The actuator 27 preferably comprises an electrically-powered motor, for example a stepper motor. Suitable stepper motors may of a type supplied by Haydon Kerk. Any actuator 27 for controlling linear movement of the spool 17 may be employed including, but not limited to, linear actuators.

The coupling unit 29 preferably includes an extension member 31, a drive member 33 and an anti-rotation member 35. The extension member 31 preferably comprises corrosion resistant material, for example stainless steel. The drive member 33 preferably comprises plastics material. The anti-rotation member 35 preferably comprises plastics material. The extension member 31 is secured at one end, for example by crimping, to the second end of the spool 17. The other end of the extension member 31 is secured to the drive member 33. The extension member 31 may comprise a tube. The second end of the spool 17 may be secured within the end of the tube 31. A seal member 37 preferably provides a fluid tight seal for passage of the extension member 31 through an opening 39 in the body 4 of the valve 1 to prevent leakage of water from the mixing chamber 11. The opening 39 may be provided at one end of a bore 41 in the body 4 of the valve 1. The extension member 31 may be of circular section. The seal member 37 may be annular. The seal member 37 may be of U-section.

The drive member 33 is preferably mounted on the shaft 25 of the actuator 27. The drive member 33 may have an internal screw threaded portion 43 co-operable with an external screw threaded portion 45 of the shaft 25. The anti-rotation member 35 is preferably mounted on the actuator 27. The drive member 33 is preferably located in an axial bore 47 of the anti-rotation member 35. The drive member 33 and bore 47 are preferably configured to permit axial sliding movement of the drive member 33 relative to the anti-rotation member 35 while preventing rotational movement of the drive member 33 relative to the anti-rotation member 35. For example the bore 47 may be of cruciform shape and the drive member 33 provided with ribs that co-operate with the cruciform shape to prevent rotational movement of the drive member 33 while allowing axial movement. This arrangement converts rotational movement of the shaft 25 into linear movement of the drive member 33 that is transmitted to the spool 17 of the flow control valve 5 via the extension member 31 for moving the valve members 13, 15 axially relative to the valve outlets between open and closed positions for controlling flow of fluid from the inlet chamber 9 to the mixing chamber 11. Any other arrangement for converting rotational movement of the shaft 25 into axial movement of the spool 17 may be employed.

The valve 1 may include a controller (not shown) which provides control signals to the actuators 27, 27' of the first and second flow control valves 5, 7. The controller may also include a temperature sensor and/or flow rate sensor to measure the temperature and/or flow rate of the water at the fluid outlet 12 of the valve 1 or at any other relevant point in the fluid flow path within the valve 1 or external thereto. The signals from the sensor(s) may be used to control the actuator 27, 27' of each flow control valve 5, 7 to control the temperature and/or flow rate of the water leaving the outlet 12. For example the signals may be used to maintain a desired temperature and/or flow rate or to provide feedback to the controller so that the water leaving the outlet 12 corresponds to desired settings despite changes in the water pressure and/or water temperature at the first fluid inlet and/or the second fluid inlet. The controller may include an interface to receive settings input by a user. Wired or wireless communication may be provided between the controller, sensor(s) and interface.

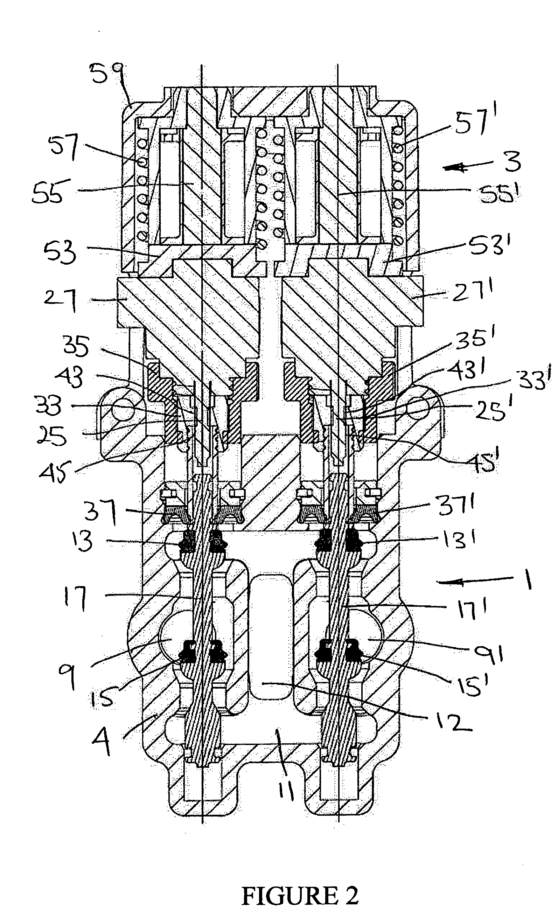

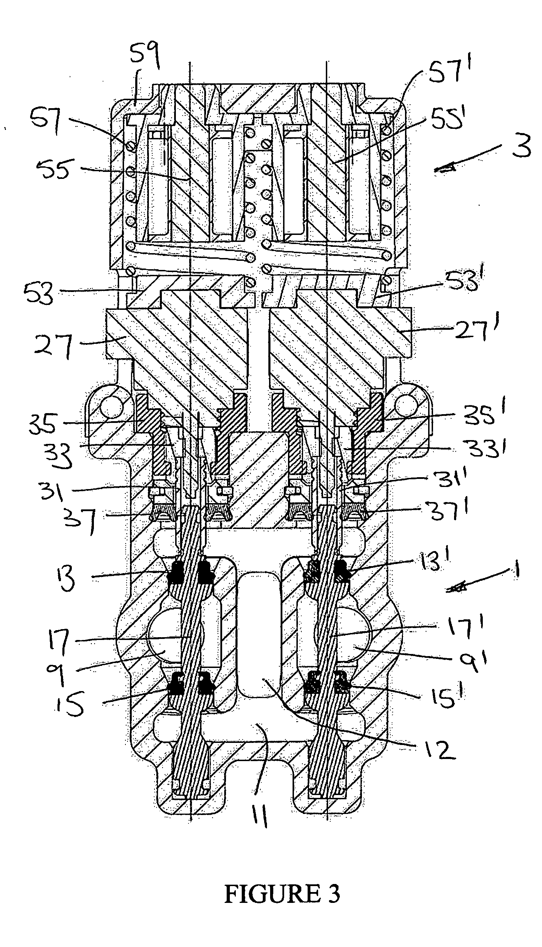

The fail-safe device 3 is preferably arranged to shut-off fluid flow in the event of a power supply failure occurring while one or both flow control valves 5, 7 is in an open position. The fail-safe device 3 preferably includes a latch unit 49 for the actuator 27 of the first flow control valve 5 and a latch unit 51 for the actuator 27' of the second flow control valve 7. The latch units 49, 51 are preferably arranged to hold the actuators 27, 27' in a control position for normal operation of the valve 1 shown in Figures 1 and 2 when the power supply to drive the actuators 27, 27' is on and to release the actuators 27, 27' for movement to close the flow control valves 5, 7 during fail-safe operation of the valve 1 shown in Figure 3 if the power supply to drive the actuators 27, 27' is interrupted when one or both of the flow control valves 5, 7 is open.

The latch units 49, 51 are similar and there follows a description of the construction and operation of the latch unit 49 for the first flow control valve 5. The same reference numerals have been used but with an additional apostrophe to identify similar features of the latch unit 51 for the second flow control valve 7 such that the construction and operation of the latch unit 51 for the second flow control valve 7 will be apparent and understood from the description of the latch unit 49 for first flow control valve 5.

The latch unit 49 preferably includes an armature 53 of magnetic material such as steel, an electromagnet 55 and a biasing member 57. The armature 53 may be attached, for example fixed, to the actuator 27 of the first flow control valve 5. The electromagnet 55 is preferably connected to the power supply for the actuator 27. The biasing member 57 may comprise a spring, for example a compression spring. The biasing member 57 may bias the actuator 27 away from the control position. The magnetic attraction force between the armature 53 and the electromagnet 55 is preferably chosen to couple the armature 53 to the electromagnet 55 to hold the actuator 27 in the control position against the biasing of the biasing member 57 when the power supply to drive the actuator 27 is on. The biasing member 57 may act between the armature 53 and the electromagnet 55.

In the control position, the actuator 27 is operable to move the spool 17 between the closed position of the first flow control valve 5 shown in Figure 1 and the full open position of the first flow control valve 5 shown in Figure 2 for controlling flow of the first fluid from the inlet chamber 9 to the mixing chamber 11. The actuator 27 is preferably operable to move the spool 17 to position the first flow control valve 5 at any intermediate position between the closed and full open positions for varying the flow of the first fluid. Preferably, flow of the second fluid from the inlet chamber 9' to the mixing chamber 11 can be controlled and varied in similar manner by the actuator 27' such that the relative proportions of the first and second fluids admitted to the mixing chamber 11 can be adjusted to provide mixed fluid at the outlet 12. When the first and second fluids are water having different temperatures, for example hot and cold water, the relative proportions can be controlled to produce mixed water having any desired intermediate temperature for the intended use such as washing, showering or bathing.

In the event of a power failure occurring when the first flow control valve 5 is in an open position, such as the full open position shown in Figure 2, the magnetic attraction force between the armature 53 and the electromagnet 55 that holds the actuator 27 in the control position is lost. The actuator 27 is released and can move away from the control position under the biasing of the biasing member 57. When the biasing member 57 is a spring, the energy stored in the spring is released, creating a biasing force acting on the armature 53 to move the actuator 27 away from the control position. The actuator 27 and thus the spool 17 may be moved to close the first flow control valve 5 as shown in Figure 3. The actuator 27 and spool 17 preferably move together in an axial direction to close the first flow control valve 5. The second flow control valve 7 may be closed in similar manner if the power is interrupted when this valve 7 is in an open position.

If the power is re-instated after fail-safe operation of the valve 1, the magnetic attraction force between the electromagnets 55, 55' and armatures 53, 53' of the actuators 27, 27' is preferably insufficient to overcome the biasing of the biasing members 57, 57' acting on the actuators 27, 27' and the flow control valves 5, 7 remain closed until the valve 1 is re-set.

In order to re-set the valve 1 following a power failure/interruption, the actuators 27, 27' are preferably operated to rotate the shafts 25, 25' in a direction to return the actuators 27, 27' to the control position without moving the spools 17, 17' so that the flow control valves 5, 7 remain closed. The actuators 27, 27' are preferably guided for axial movement to and from the control position by engagement of the anti-rotation members 35, 35' in the bores 41, 41' in the body 4. The latch units 49, 51 and actuators 27, 27' are preferably located within a housing 59 connected to the body 4 of the valve 1.

Once the actuators 27, 27' have returned to the control position in Figure 1 with the flow control valves 5, 7 closed, the actuators 27, 27' can again be operated to control movement of the spools 17, 17' as described previously for controlling flow of the first and second fluids during normal operation of the valve 1.

As will be understood, the above-described fail-safe operation occurs whenever there is a power failure/interruption with one or both flow control valves 5, 7 in an open position. If the flow control valves 5, 7 are returned to the closed position shown in Figure 1 during normal operation and the power fails or is interrupted in this position, the actuators 27, 27' remain in the control position even though the magnetic attraction force between the electromagnets 55, 55' and the armatures 53, 53' has been lost because the spools 17, 17' are seated at the end of the blind bores 23, 23' in the valve body 4. As a result, the armatures 53, 53' are re-coupled to the electromagnets 55, 55' when power is restored allowing normal operation of the valve 1.

In a modification (not shown) of the arrangement in Figures 1 to 3, the electromagnets 55, 55' may be replaced by a single electromagnet to which both armatures 53, 53' may be coupled for holding the actuators 27, 27' in the control position. In another modification (not shown) of the arrangement in Figures 1 to 3, the compression springs 57, 57' may be replaced by any other springs, for example tension springs, or any other biasing members arranged so that, when the actuators 27, 27' are released, the actuators 27, 27' and spools 17, 17' are moved to close the valve 1 by the energy stored in the springs when the actuators 27, 27' are held in the control position.

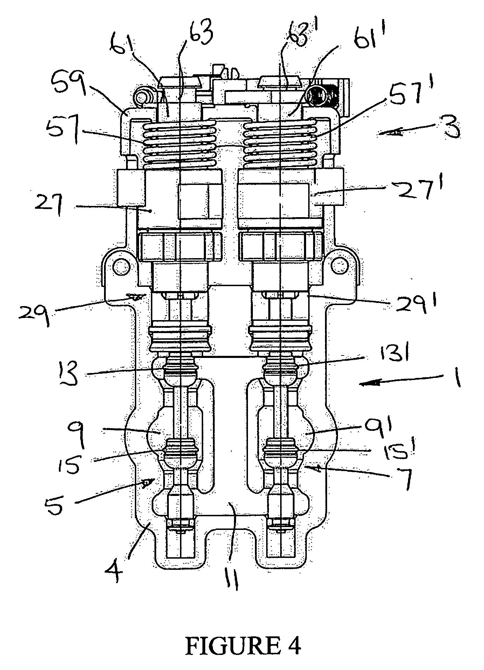

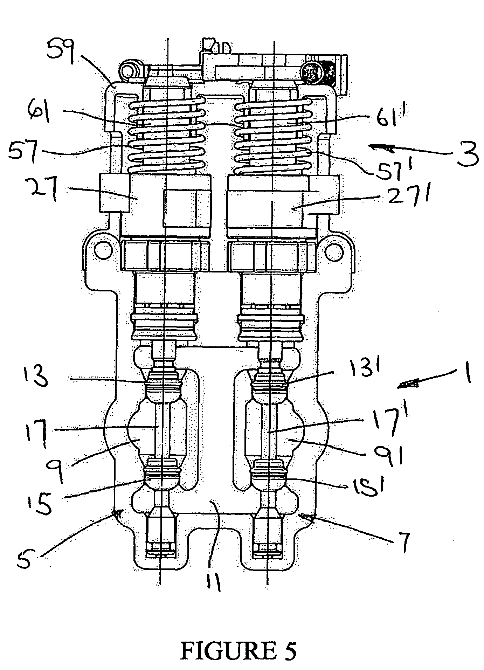

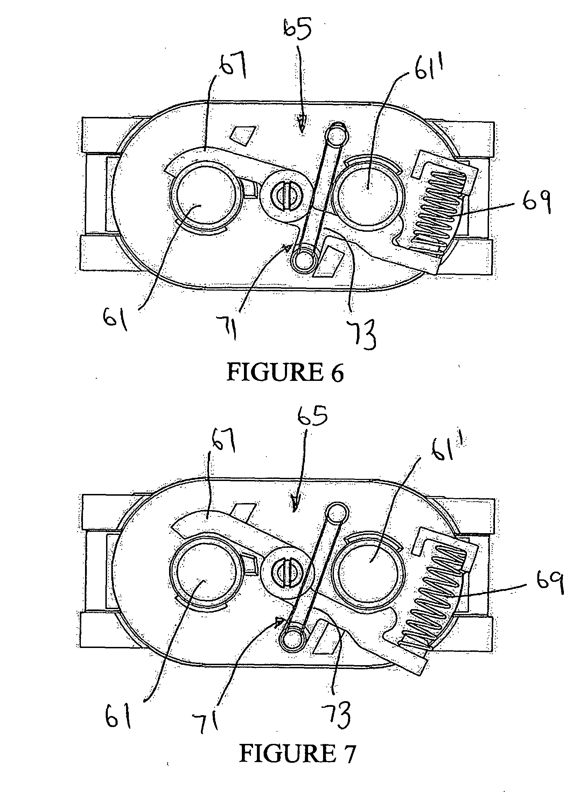

Referring now to Figures 4 to 7, an alternative fail-safe device 3 is shown in which the magnetic coupling provided by the latch units 49, 51 to hold the actuators 27, 27' in the control position against the biasing of the springs 57, 57' for normal operation of the valve 1 is replaced by a mechanical coupling. Like reference numerals are used to indicate parts of the valve 1 corresponding to the previous embodiment.

In this embodiment, the actuators 27, 27' have axial extensions 61, 61' that project through openings in the housing 59 and are preferably provided with an annular groove 63, 63'.

The fail-safe device 3 preferably includes a latch unit 65 for both actuators 27, 27'. The latch unit 65 preferably includes a catch for holding the actuators 27, 27' in the control position. The catch is preferably co-operable with the axial extensions 61, 61' to hold the actuators 27, 27' in the control position. The catch is preferably movable, for example rotatable or slidable, to release the actuators 27, 27' if the power supply to the actuators fails or is interrupted. The catch may comprise a catch plate 67.

The catch plate 67 may be mounted for rotation about an axis intermediate the ends. The catch plate 67 preferably engages the grooves 63, 63' on opposite sides of the rotational axis to hold the actuators 27, 27' in the control position against the biasing of biasing members 57, 57'. The biasing members 57, 57' may comprise springs, for example compression springs. The biasing members 57, 57' preferably surround the extensions 61, 61' and act between the housing 59 and the actuators 27, 27' to bias the actuators 27, 27' away from the control position.

The catch plate 67 is preferably biased by a biasing member 69, for example a compression spring, in a direction to disengage the grooves 63, 63' and is preferably retained in the engaged position by an actuator 71 responsive to failure/interruption of the power supply to the actuators 27, 27'. In this embodiment, the actuator 71 is provided by a shape memory alloy (SMA) wire loop 73 that extends between the catch plate 67 and the housing 59.

The SMA wire loop 73 is preferably connected to the power supply to the actuators 27, 27' and preferably contracts when the power is "on" to oppose the biasing of the spring 69 and maintain the engagement between the catch plate 67 and the grooves 63, 63' in the axial extensions 61, 61' of the actuators 27, 27' to hold the actuators 27, 27' in the control position for normal operation of the valve 1 as described previously for the embodiment of Figures 1 to 3.

In the event of failure or interruption of the power supply with one or both flow control valves 5, 7 in an open position, the SMA wire loop 73 extends allowing the catch plate 67 to rotate under the biasing of the spring 69 to disengage the grooves 63, 63' in the axial extensions 61, 61' of the actuators 27, 27' thereby releasing the actuators 27, 27' to move under the biasing of springs 57, 57' to close the flow control valves 5, 7 as described previously for the embodiment of Figures 1 to 3.

When re-setting the valve 1 following fail-safe operation to shut-off flow, the shafts 25, 25' of the actuators 27, 27' are preferably rotated in a direction to return the actuators 27, 27' to the control position without opening the flow control valves 5, 7. This may be done before power is re-instated to the latch unit 65 to allow the catch plate 67 to re-engage the grooves 61, 61' when power is restored and the SMA wire loop 73 contracts to rotate the catch plate 67 against the biasing of the spring 69. Alternatively, end faces of the axial extensions 61, 61' may be chamfered to co-operate with and displace the catch plate 67 sufficiently to allow the catch plate 67 to re-engage the grooves 63, 63'.

In other respects the construction and operation of the valve 1 is similar to the embodiment of Figures 1 to 3 and will be understood from the description of Figures 1 to 3. Like reference numerals are used to indicate similar parts.

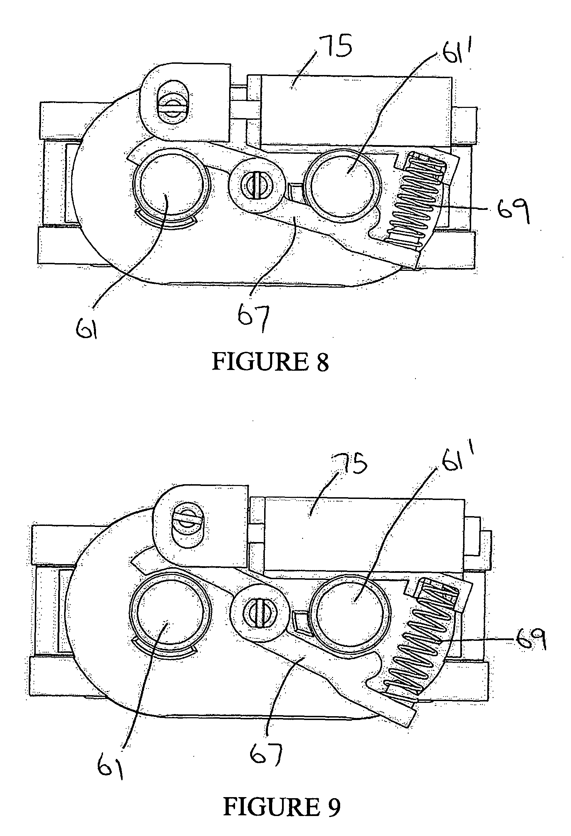

Referring now to Figures 8 and 9, a modification to the fail-safe device 3 of Figures 4 to 7 is shown in which a solenoid actuator 75 is provided in place of the SMA wire loop 73. In this embodiment, the solenoid actuator 75 is preferably connected to the power supply to the actuators 27, 27' and maintains the engagement of the catch plate 67 with the grooves 63, 63' in the axial extensions of the actuators 27, 27' when the power is "on". In the event of failure or interruption of the power supply, the solenoid actuator 75 no longer opposes the biasing of the spring 69 and the catch plate 67 is able to rotate to disengage the grooves 63, 63' and allow the actuators 27, 27' to move under the biasing of the springs 57, 57' to close the flow control valves 5, 7 as described previously for the embodiment of Figures 1 to 3.

In other respects the operation of this modified embodiment is similar to the embodiment of Figures 4 to 7 and will be understood from the description of Figures 4 to 7. Like reference numerals are used to indicate similar parts.

In a modification (not shown) of the arrangements in Figures 4 to 9, the grooves 63, 63' in the extensions 61, 61' of the actuators 27, 27' may be replaced by any other suitable formations for engagement with the catch plate 67 to hold the actuators 27, 27' in the control position. In another modification (not shown) of the arrangements in Figures 4 to 9, the catch plate 67 may be slidable to engage and disengage the grooves 63, 63' or other formations in the extensions 61, 61' of the actuators 27, 27'. In another modification (not shown) of the arrangements in Figures 4 to 9, the compression spring 69 may be replaced by any other spring, for example a tension spring, or any other biasing member arranged so that the catch plate 67 is rotated to release the actuators 27, 27' in response to interruption or failure of the power supply. In another modification (not shown) of the arrangements in Figures 4 to 9, the grooves 63, 63' in the extensions 61, 61' of the actuators 27, 27' and the catch plate 67 may be replaced by any other suitable elements that are co-operable to hold the actuators 27, 27' in the control position. In another modification (not shown) of the arrangements in Figures 4 to 9, a separate latch unit may be provided for each actuator 27, 27'. Where separate latch units are provided these may comprise a catch plate co-operable with the extension of the actuator to hold the actuator in the control position and movable to release the actuator. The latch units may comprise any of the arrangements described herein.

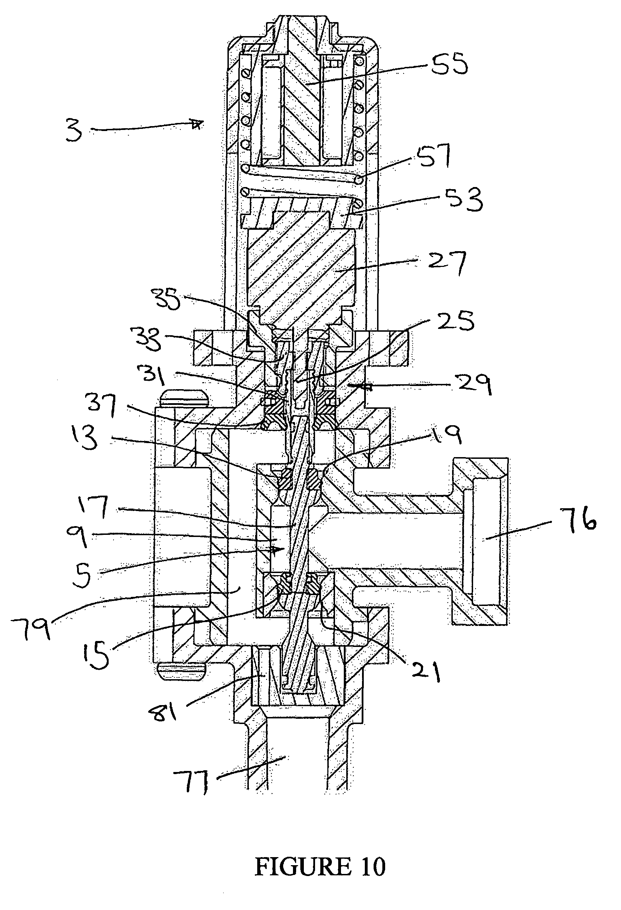

Referring now to Figure 10, there is shown an embodiment having a single flow control valve and fail-safe device suitable for applications in which it is desirable to control fluid flow. One such application is in an instantaneous water heater of the type commonly used in electric showers to provide a source of hot water on demand.

Figure 10 shows the flow control valve 5 and fail safe device 3 from the embodiment of Figures 1 to 3 arranged to control flow of a water supply, typically cold water, to a heat exchanger tank (not shown) of an instantaneous water heater. The control valve 5 has an inlet 76 connected to the water supply and an outlet 77 connected to the heat exchanger tank. The inlet 76 opens to the inlet chamber 9 of the flow control valve 5 and the valve outlets 19, 21 open to an outlet chamber 79 leading to the outlet 77 through one or more ports 81.

In this type of water heater, the incoming supply of water is heated as it flows through the heat exchanger tank by one or more electric heating elements. The outlet water temperature from the heat exchanger tank is dependent on the flow rate of the water and the power input to the heater tank. The power input can often be selected by varying the number and power rating of the heating elements such that, for a given power input, the outlet water temperature can be controlled by varying the flow rate.

In this application, if the power supply to the heat exchanger tank fails or is interrupted while the flow control valve 5 is open, the fail safe device 3 is operable to close the valve 5 and shut-off the flow. Figure 10 shows the flow control valve 5 in the closed position following fail-safe operation. A time delay may be provided before shutting-off the flow to allow the heat exchanger tank to be flushed with cold water to reduce the temperature of the heating elements and prevent any water remaining in the heat exchanger tank being heated to an elevated temperature which may give rise a risk of scalding if the power is restored and the water heater turned on again soon after fail-safe operation.

In other respects the construction and operation of the flow control valve 5 and the fail-safe device 3 will be understood from the description of Figures 1 to 3 and like reference numerals are used to indicate similar parts. It will be understood that the flow control valve 5 and/or fail-safe device could be replaced by any of the flow control valves and fail-safe devices described herein including but not limited to those shown in Figures 4 to 9 and any modifications thereof referred to herein.

Another application where a single flow control valve and fail-safe device might be provided is to control the flow of water from a mixing valve. Other applications will be apparent to those skilled in the art.

In the above-described embodiments the or each flow control valve 5, 7 is of the type disclosed in United Kingdom Patent Application No.2503279 in which the valve spool 17 is provided with two valve members 13, 15 for controlling fluid flow through the valve 1. It will be understood, however, that this is not essential and that the concepts described herein have wider application to provide fail-safe operation of any valve having at least one valve member movable towards and away from a closed position by means of an actuator for controlling flow through the valve.

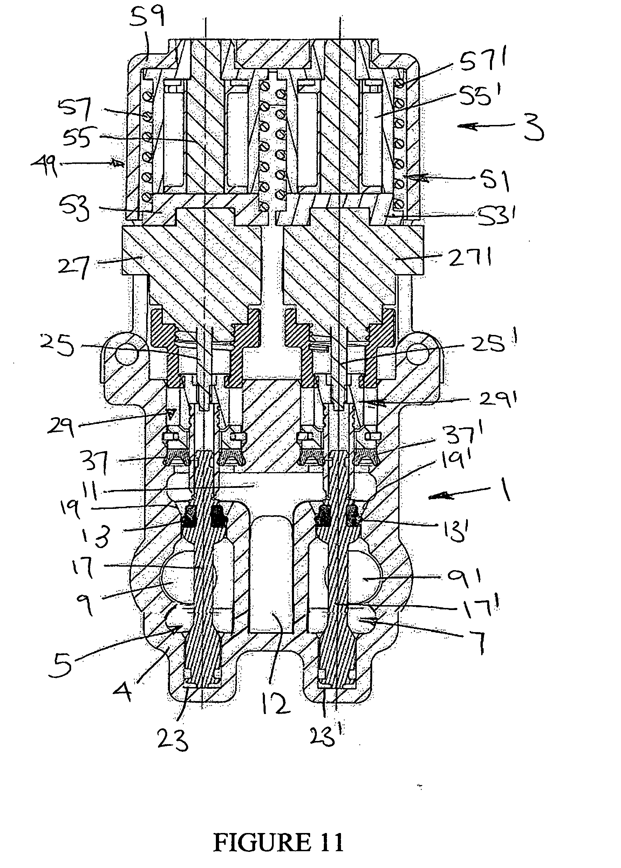

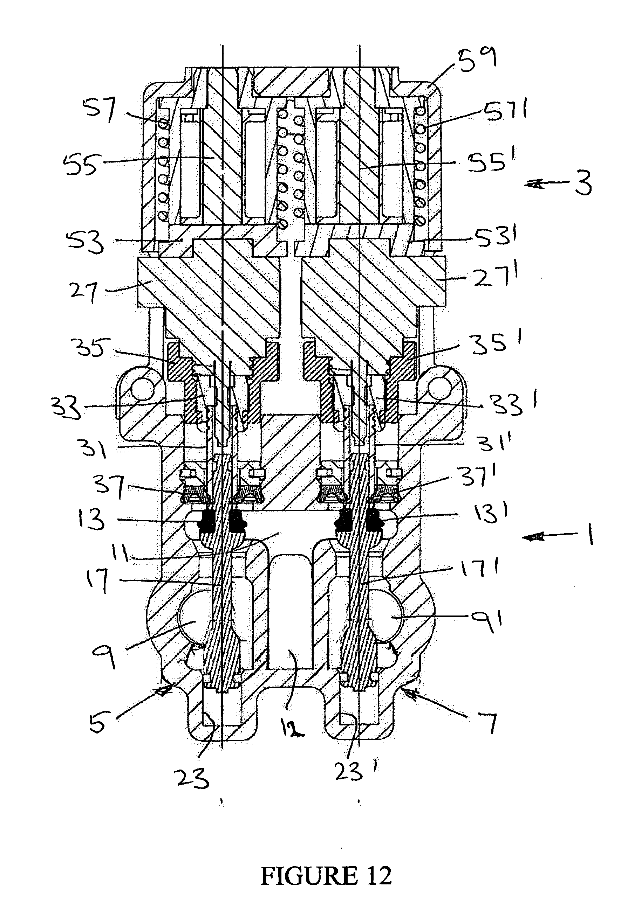

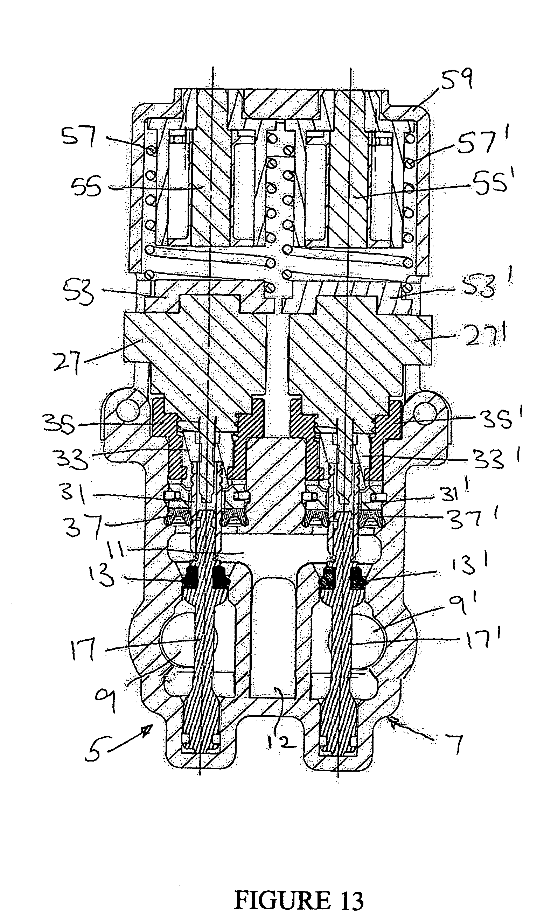

Referring now to Figures 11 to 13, a modification of the valve shown in Figures 1 to 3 is shown in which like reference numerals are used to indicate corresponding parts. In this modification, the inlet chambers 9, 9' of the flow control valves 5, 7 open to the mixing chamber 11 through a single valve outlet 19, 19' and the valve spools 17, 17' are provided with a single valve member 13, 13' for controlling flow through the valve outlet 19, 19'. In other respects the construction and operation of the valve 1 and fail-safe device 3 is similar to and will be understood from the description of Figures 1 to 3. A similar modification may be made to the valve shown in Figure 10 in which a single flow control valve is provided.

The fail-safe device 3 shown in Figures 11 to 13 employs latch units 49, 51 that provide a magnetic coupling to hold the actuators 27, 27' in the control position. It will be understood however that the latch units 49, 51 may be replaced by any of the latch units described herein such as the latch units shown in Figures 4 to 9 that provide a mechanical coupling to hold the actuators 27, 27' in the control position.

By employing movement of the actuator to close the valve during fail-safe operation, no components of the fail-safe device are present in the fluid flow path. In particular, the spring biasing the actuator is located outside the flow path and is therefore dry and does not provide a surface area for microbial growth within the fluid flow path. In addition, where a magnetic coupling is employed to hold the actuator in the control position, the electromagnetic element is stationary enabling easier connection to the power supply.

Although the exemplary embodiments describe arrangements in which one or more flow control valves of the type described in United Kingdom Patent Application No. 2503279 is/are provided with a fail-safe device, it will be understood that the fail-safe devices described herein have wider application and could be employed with any electrically powered valve to shut-off flow in the event of failure or interruption of the power supply to the valve. Moreover, while it may generally be desirable to shut-off the flow completely in the event of failure or interruption of the power supply to the valve to prevent waste from uncontrolled flow of fluid (water) through the valve, there may be applications where it may be desirable to allow some flow of fluid (water) to continue. Thus, it may be that the fail-safe device is arranged to control flow to provide a predetermined flow rather than to shut-off the flow completely. Such predetermined flow might be required in some applications for safety reasons.

It should be noted that the term "exemplary" as used herein to describe various embodiments is intended to indicate that such embodiments are possible examples, representations, and/or illustrations of possible embodiments (and such term is not intended to connote that such embodiments are necessarily extraordinary or superlative examples).

The terms "coupled," "connected," and the like as used herein mean the joining of two members directly or indirectly to one another. Such joining may be stationary (e.g., permanent) or moveable (e.g., removable or releasable). Such joining may be achieved with the two members or the two members and any additional intermediate members being integrally formed as a single unitary body with one another or with the two members or the two members and any additional intermediate members being attached to one another.

References herein to the positions of elements (e.g., "top," "bottom," "above," "below," etc.) are merely used to describe the orientation of various elements in the FIGURES. It should be noted that the orientation of various elements may differ according to other exemplary embodiments, and that such variations are intended to be encompassed by the present disclosure.

It is important to note that the construction and arrangement of the valves and related assemblies as shown in the various exemplary embodiments is illustrative only. Although only a few embodiments have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter described herein. For example, elements shown as integrally formed may be constructed of multiple parts or elements, the position of elements may be reversed or otherwise varied, and the nature or number of discrete elements or positions may be altered or varied. The order or sequence of any process or method steps may be varied or re-sequenced according to alternative embodiments.

Other substitutions, modifications, changes and omissions may also be made in the design, operating conditions and arrangement of the various exemplary embodiments without departing from the scope of the claims described herein. Other modifications that can be made will be apparent to those skilled in the art and the invention extends to and includes all such modifications.

## Claims

1. A valve for controlling fluid flow and a fail-safe device responsive to failure of a power supply to the valve, the valve includes a valve member (17,17') coupled to an actuator (27,27') for movement towards and away from a closed position for controlling fluid flow through the valve, a biasing member (57,57') configured to bias the actuator (27,27') away from a control position, a latch unit (65) configured to hold the actuator (27,27') in the control position against the biasing of the biasing member (57,57') for normal operation of the valve when the power supply is on and to release the actuator (27,27') for movement of the actuator (27,27') away from the control position under the biasing of the biasing member (57,57') for fail-safe operation of the valve in response to failure of the power supply when the valve is open to move the valve member (17,17') towards the closed position under the biasing of the actuator (27,27') by the biasing member (57,57') **characterised in that** the actuator (27,27') is held in the control position by a mechanical coupling, wherein the latch unit (65) is configured to engage the actuator (27,27') to hold the actuator (27,27') in the control position, wherein the latch unit (65) includes a catch (67) providing the mechanical coupling, and the actuator (27,27') is held in the control position by the catch (67) when the power supply is on and is released when the power supply is interrupted.

2. The valve of claim 1 wherein the biasing member is a spring (57,57').

3. The valve of claim 2 wherein the spring (57,57') is configured in an energised state when the actuator (27,27') is held in the control position, and energy stored in the spring (57,57') in the energised state is employed for fail-safe operation when the actuator (27,27') is released.

4. The valve of any preceding claim wherein the valve member (17,17') is moved to a safe position in response to fail-safe operation.

5. The valve of any preceding claim wherein the valve member (17,17') is moved to the closed position to shut-off fluid flow or to a position in which some fluid flow is permitted in response to fail-safe operation.

6. The valve of any preceding claim wherein the valve member (17,17') remains in position when power to the valve is restored following fail-safe operation until the actuator (27,27') is re-set in the control position.

7. The valve of any preceding claim wherein the actuator (27,27') is operable to move relative to the valve member (17,17') for re-setting the actuator (27,27') in the control position.

8. The valve of any preceding claim wherein the actuator (27,27') is a linear actuator.

9. The valve of claim 8 wherein the actuator (27,27') is coupled to the valve member (17,17') by a coupling unit (29,29') for converting rotational movement of the actuator (27,27') into linear movement of the valve member (17,17') towards and away from the closed position.

10. The valve of any preceding claim wherein the valve comprises a first valve member (17) coupled to a first actuator (27) for movement towards and away from a closed position for controlling flow of a first fluid through the valve, a second valve member (17') coupled to a second actuator (27') for movement towards and away from a closed position for controlling flow of a second fluid through the valve, wherein the first and second actuators (27,27') are held in control positions by the fail-safe device for normal operation of the valve with the power supply on and are released in response to failure of the power supply for movement of the first and second actuators away from the control positions for fail-safe operation of the valve in response to failure of the power supply when the valve is open to move the first and second valve members (17,17') towards the closed position.

11. A method for operating a valve for controlling fluid flow, and providing a fail-safe response to failure of a power supply to the valve, the method including the steps of:
coupling a valve member (17,17') to an actuator (27,27') for movement towards and away from a closed position for controlling fluid flow through the valve;
providing a biasing member (57,57') configured to bias the actuator (27,27') away from a control position,
providing a latch unit (65) holding the actuator (27,27') in the control position against the biasing of the biasing member (57,57') for normal operation of the valve when the power supply is on, and to release the actuator (27,27') for movement of the actuator (27,27') away from the control position under the biasing of the biasing member (57,57') for fail-safe operation of the valve in response to failure of the power supply when the valve is open to move the valve member (17,17') towards the closed position under the biasing of the actuator (27,27') by the biasing member (57,57'),
holding the actuator (27,27') in the control position by a mechanical coupling,
engaging the actuator (27,27') by the latch unit (65) to hold the actuator (27,27') in the control position, wherein the latch unit (65) includes a catch (67) providing the mechanical coupling, and the actuator (27,27') is held in the control position by the catch (67) when the power supply is on and is released when the power supply is interrupted.

## Patentansprüche

1. Ein Ventil zur Steuerung einer Fluidströmung und eine Fail-Safe-Vorrichtung, die auf den Ausfall einer Stromversorgung des Ventils reagiert, das Ventil schließt ein Ventil-Teil (17,17') ein, das mit einem Aktuator (27,27') gekoppelt ist, für eine Bewegung zu und weg von einer geschlossenen Position zur Steuerung einer Fluidströmung über das Ventil, ein Vorspannungs-Teil (57,57'), das so gestaltet ist, dass es den Aktuator (27,27') weg von einer Steuerungsposition vorspannt, ein Verschluss-Teil (65), das so gestaltet ist, dass es den Aktuator (27,27') in der Steuerungsposition gegen die Vorspannung des Vorspannungs-Teils (57,57') für den Normalbetrieb des Ventils hält, wenn Stromversorgung vorhanden ist, und den Aktuator (27,27') für die Bewegung des Aktuators (27,27') weg von der Steuerungsposition, unter der Vorspannung des Vorspannungs-Teils (57,57') für den Fail-Safe-Betrieb des Ventils, als Reaktion auf einen Ausfall der Stromversorgung, freigibt, wenn das Ventil offen ist, um das Ventil-Teil (17,17') in die geschlossene Position unter der Vorspannung des Aktuators (27,27') durch das Vorspannungs-Teil (57,57') zu bewegen, **dadurch gekennzeichnet, dass** der Aktuator (27,27') durch eine mechanische Kopplung in der Steuerungsposition gehalten wird, wobei die Verschlusseineit (65) so gestaltet ist, dass sie den Aktuator (27,27') einklinkt, um den Aktuator (27,27') in der Steuerungsposition zu halten, wobei die Verschlusseinheit (65) eine Arretierung (67) einschließt, die die mechanische Kopplung bereitstellt, und der Aktuator (27,27') durch die Arretierung (67) in der Steuerungsposition gehalten wird, wenn Stromversorgung vorhanden ist, und freigegeben wird, wenn die Stromversorgung unterbrochen ist.

2. Das Ventil gemäß Anspruch 1, wobei das Vorspannungs-Teil eine Feder (57,57') ist.

3. Das Ventil gemäß Anspruch 2, wobei die Feder (57,57') so gestaltet ist, dass sie sich in einem unter Spannung stehenden Zustand befindet, wenn der Aktuator (27,27') in der Steuerungsposition gehalten wird, und Energie, die in der Feder (57,57') im Spannungszustand gespeichert ist, für den Fail-Safe-Betrieb verwendet wird, wenn der Aktuator (27,27') freigegeben wird.

4. Das Ventil gemäß eines der vorhergehenden Ansprüche, wobei das Ventil-Teil (17,17') als Reaktion auf den Fail-Safe-Betrieb in eine sichere Position bewegt wird.

5. Das Ventil gemäß eines der vorhergehenden Ansprüche, wobei das Ventil-Teil (17,17') in eine geschlossene Position bewegt wird, um die Fluidströmung zu unterbrechen, oder in eine Position bewegt wird, in der eine gewisse Menge an Fluidströmung, als Reaktion auf den Fail-Safe-Betrieb, erlaubt ist.

6. Das Ventil gemäß eines der vorhergehenden Ansprüche, wobei das Ventil-Teil (17,17') in Position bleibt, wenn die Stromzufuhr zum Ventil, als Folge des Fail-Safe-Betriebs, wiederaufgenommen wird, bis der Aktuator (27,27') wieder in die Steuerungsposition zurückgestellt ist.

7. Das Ventil gemäß eines der vorhergehenden Ansprüche, wobei der Aktuator (27,27') betriebsbereit ist, um sich im Verhältnis zum Ventil-Teil (17,17') zur Wiedereinstellung des Aktuators (27,27') in die Steuerungsposition zu bewegen.

8. Das Ventil eines der vorhergehenden Ansprüche, wobei der Aktuator (27,27') ein linearer Aktuator ist.

9. Das Ventil gemäß Anspruch 8, wobei der Aktuator (27,27') mit dem Ventil-Teil (17,17') über eine Kopplungseinheit (29,29') verbunden ist, um eine Drehbewegung des Aktuators (27,27') in eine lineare Bewegung des Ventil-Teils (17,17'), zu und weg von der geschlossenen Position, umzuwandeln.

10. Das Ventil eines der vorhergehenden Ansprüche, wobei das Ventil ein erstes Ventil-Teil (17) aufweist, das mit einem ersten Aktuator (27), für eine Bewegung zu und weg von einer geschlossenen Position zur Steuerung der Strömung eines ersten Fluids durch das Ventil, verbunden ist, ein zweites Ventil-Teil (17'), das mit einem zweiten Aktuator (27'), für die Bewegung zu und weg von einer geschlossenen Position zur Steuerung der Strömung eines zweiten Fluids durch das Ventil, verbunden ist, wobei der erste und der zweite Aktuator (27,27'), durch die Fail-Safe-Vorrichtung für den Normalbetrieb des Ventils, in der Steuerungsposition gehalten werden, wenn Stromversorgung vorhanden ist, und freigegeben werden, als Reaktion auf einen Ausfall der Stromversorgung für die Bewegung des ersten und zweiten Aktuators, weg von den Steuerungspositionen für den Fail-Safe-Betrieb des Ventils, als Reaktion auf den Ausfall der Stromversorgung, wenn das Ventil offen ist, um das erste und zweite Ventil-Teil (17,17') in die geschlossene Position zu bewegen.

11. Ein Verfahren für den Betrieb eines Ventils zur Steuerung einer Fluidströmung und Bereitstellung eines Fail-Safe-Betriebs, als Reaktion auf den Ausfall einer Stromversorgung des Ventils, das Verfahren schließt dabei die folgenden Schritte ein:
die Kopplung eines Ventil-Teils (17,17') an einen Aktuator (27,27') für die Bewegung zu und weg von einer geschlossenen Position zur Steuerung einer Fluidströmung durch das Ventil;
die Bereitstellung eines Vorspannungs-Teils (57,57'), das so gestaltet ist, dass es den Aktuator (27,27') weg von einer Steuerungsposition vorspannt,
die Bereitstellung einer Verschlusseinheit (65), die den Aktuator (27,27') in der Steuerungsposition, gegen die Vorspannung des Vorspannungs-Teils (57,57') für den Normalbetrieb des Ventils, festhält, wenn Stromversorgung vorhanden ist, und den Aktuator (27,27') für die Bewegung des Aktuators (27,27'), weg von der Steuerungsposition unter der Vorspannung des Vorspannungs-Teils (57,57') für den Fail-Safe-Betrieb des Ventils, freigibt, als Reaktion auf den Ausfall der Stromversorgung, wenn das Ventil offen ist, um das Ventil-Teil (17,17') zur geschlossenen Position zu bewegen, unter der Vorspannung des Aktuators (27,27') durch das Vorspannungs-Teil (57,57'),
das den Aktuator (27,27') durch eine mechanische Kopplung in der Steuerungsposition hält,
indem der Aktuator (27,27') in die Verschlusseinheit (65) einrastet, um den Aktuator (27,27') in der Steuerungsposition zu halten, wobei die Verschlusseinheit (65) eine Arretierung (67) einschließt, die die mechanische Kopplung bereitstellt, und der Aktuator (27,27') in der Steuerungsposition durch die Arretierung (67) gehalten wird, wenn Stromversorgung vorhanden ist, und freigegeben wird, wenn die Stromzufuhr unterbrochen ist.

## Revendications

1. Vanne de commande d'un flux de fluide et dispositif fiable répondant de la défaillance d'une alimentation électrique de la vanne, la vanne incluant un élément de vanne (17,17') couplé à un actionneur (27,27') pour permettre le mouvement vers et depuis une position fermée pour le contrôle du flux de fluide à travers la vanne, un élément de déviation (57,57') conçu pour dévier l'actionneur (27,27') d'une position de commande, une unité de verrouillage (65) conçue pour maintenir l'actionneur (27,27') dans la position de commande à l'encontre de la déviation exercée par l'élément de déviation (57,57') pour permettre un fonctionnement normal de la vanne lorsque l'alimentation électrique est en marche et pour relâcher l'actionneur (27,27') pour permettre le mouvement de l'actionneur (27,27') depuis la position de commande pendant la déviation exercée par l'élément de déviation (57, 57') pour permettre un fonctionnement fiable de la vanne en réponse à la défaillance de l'alimentation électrique lorsque la vanne est ouverte afin de déplacer l'élément de vanne (17,17') vers la position fermée pendant la déviation de l'actionneur (27,27') exercée par l'élément de déviation (57,57'), **caractérisée en ce que** l'actionneur (27,27') est maintenu dans la position de commande par un couplage mécanique, dans laquelle vanne l'unité de verrouillage (65) est conçue pour s'engager dans l'actionneur (27,27') pour maintenir l'actionneur (27,27') dans la position de commande, dans laquelle l'unité de verrouillage (65) comprend une prise (67) assurant le couplage mécanique et l'actionneur (27,27') est maintenu dans la position de commande par la prise (67) lorsque l'alimentation électrique est en marche et relâché lorsque l'alimentation électrique est interrompue.

2. Vanne selon la revendication 1, dans laquelle l'élément de déviation est un ressort (57,57').

3. Vanne selon la revendication 2, dans laquelle le ressort (57,57') est mis en état énergisé lorsque l'actionneur (27,27') est maintenu dans la position de commande et l'énergie stockée dans le ressort (57,57') en état énergisé est employée pour permettre un fonctionnement fiable lorsque l'actionneur (27,27') est relâché.

4. Vanne selon l'une quelconque des revendications précédentes, dans laquelle l'élément de vanne (17,17') est déplacé vers une position de sécurité en réponse à un fonctionnement fiable.

5. Vanne selon l'une quelconque des revendications précédentes, dans laquelle l'élément de vanne (17,17') est déplacé vers la position fermée pour couper le flux de fluide à une position dans laquelle un certain flux de fluide est permis en réponse à un fonctionnement fiable.

6. Vanne selon l'une quelconque des revendications précédentes, dans laquelle l'élément de vanne (17,17') reste en position lorsque le courant de la vanne est restauré suite à un fonctionnement fiable jusqu'à ce que l'actionneur (27,27') soit remis dans la position de commande.

7. Vanne selon l'une quelconque des revendications précédentes, dans laquelle l'actionneur (27,27') est utilisable pour un déplacement par rapport à l'élément de vanne (17,17') afin de remettre l'actionneur (27,27') dans la position de commande.

8. Vanne selon l'une quelconque des revendications précédentes, dans laquelle l'actionneur (27,27') est un actionneur linéaire.

9. Vanne selon la revendication 8, dans laquelle l'actionneur (27,27') est couplé à l'élément de vanne (17,17') par une unité de couplage (29,29') pour convertir le mouvement de rotation de l'actionneur (27,27') en un mouvement linéaire de l'élément de vanne (17,17') vers et depuis la position fermée.

10. Vanne selon l'une quelconque des revendications précédentes, dans laquelle la vanne comprend un premier élément de vanne (17) couplé à un premier actionneur (27) pour permettre le mouvement vers et depuis une position fermée pour contrôler le flux d'un premier fluide à travers la vanne, un second élément de vanne (17') couplé à un second actionneur (27') pour permettre le mouvement vers et depuis une position fermée pour contrôler un second flux de fluide à travers la vanne, vanne dans laquelle les premier et second actionneurs (27,27') sont maintenus dans des positions de commande par le dispositif fiable pour permettre un fonctionnement normal de la vanne avec l'alimentation électrique en marche et relâchés en réponse à la défaillance de l'alimentation électrique pour permettre le mouvement des premier et second actionneurs depuis les positions de commande pour permettre un fonctionnement fiable de la vanne en réponse à une défaillance de l'alimentation électrique lorsque la vanne est ouverte afin de déplacer les premier et second éléments de vanne (17,17') vers la position fermée.

11. Procédé d'utilisation d'une vanne de commande de flux de fluide et d'apport d'une réponse fiable à la défaillance d'une alimentation électrique de la vanne, ce procédé comprenant les étapes de :
couplage d'un élément de vanne (17,17') à un actionneur (27,27') pour permettre le mouvement vers et depuis une position fermée afin de commander le flux de fluide à travers la vanne ;
prévision d'un élément de déviation (57,57') conçu pour dévier l'actionneur (27,27') d'une position de commande,
prévision d'une unité de verrouillage (65) maintenant l'actionneur (27,27') dans la position de commande à l'encontre de la déviation exercée par l'élément de déviation (57,57') pour permettre le fonctionnement normal de la vanne lorsque l'alimentation électrique est en marche et pour relâcher l'actionneur (27,27') pour permettre le mouvement de l'actionneur (27,27') depuis la position de commande pendant la déviation exercée par l'élément de déviation (57,57') pour permettre le fonctionnement fiable de la vanne en réponse à la défaillance de l'alimentation électrique lorsque la vanne est ouverte afin de déplacer l'élément de vanne (17,17') vers la position fermée pendant la déviation de l'actionneur (27,27') par l'élément de déviation (57,57'),
maintien de l'actionneur (27,27') dans la position de commande par un couplage mécanique,
engagement de l'unité de verrouillage (65) dans l'actionneur (27,27') afin de maintenir l'actionneur (27,27') dans la position de commande, laquelle unité de verrouillage (65) comprenant une prise (67) assurant le couplage mécanique et l'actionneur (27,27') étant maintenu dans la position de commande par la prise (67) lorsque l'alimentation électrique est en marche et étant relâché lorsque l'alimentation électrique est interrompue.
